# EUROPÄISCHE PATENTANMELDUNG

(11) **EP 3 567 004 A1**
(43) Veröffentlichungstag der Anmeldung: **13.11.2019**
(21) Anmeldenummer: 18170956.9
(22) Anmeldetag: 07.05.2018
(51) Int. Cl.: C01B 7/07, B01J 20/26, B01D 53/02, B01D 53/14, B01D 53/68, F17C 11/00, B01J 20/28

(54) **SPEICHERMEDIUM UND VERFAHREN FÜR DIE ABTRENNUNG, DIE SPEICHERUNG UND DEN TRANSPORT VON CHLOR AUS CHLOR ENTHALTENDEN GASEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Speichermedium und ein Verfahren zur Nutzung eines Speichermediums auf Basis ionischer Verbindungen, welches Chlor und Chlor aus Prozessgasen reversibel aufnehmen, speichern und durch Veränderung der Umgebungsbedingungen wieder freigeben kann, wobei das Speichermedium für diese Aufgabe nach der Entladung wiederverwendet werden kann.

## Beschreibung

Die Erfindung betrifft ein Verfahren zur Nutzung eines Speichermediums auf Basis ionischer Verbindungen, welches Chlor und Chlor aus Prozessgasen aufnehmen, speichern und durch Veränderung der Umgebungsbedingungen wieder freigeben kann, wobei das Speichermedium für diese Aufgabe nach der Entladung wiederverwendet werden kann. Die Vorteile dieser Erfindung sind, dass die Aufnahme von Chlor durch die Speichermedien bei milden Bedingungen erfolgt, die Speicher sowohl im be- als auch entladenen Zustand flüssig sind und das Chlor bei Umgebungsbedingungen einen deutlich verringerten Dampfdruck im Gegensatz zu elementarem Chlor aufweist, was einen deutlichen Sicherheitszugewinn für die Speicherung und den Transport von Chlor darstellt.

Bei der industriellen Herstellung und Verwendung von Chlor gibt es verschiedene Prozessschritte, die optimierungsfähig sind. Dazu gehören die Chlorverflüssigung für die Reinigung des Chlors, die Wiedergewinnung von Chlor aus Chlor enthaltenden Prozessgasen und die Verflüssigung zum Zwecke der Speicherung und des Transports von Chlor.

So wird bei der Chlorherstellung die Verflüssigung des Chlors genutzt, um andere Gase, die neben Chlor als Verunreinigung vorliegen, abzutrennen. Zu diesen Verunreinigungen zählen Gase wie Sauerstoff, Stickstoff oder Kohlendioxid, die niedrigere Siedepunkte als Chlor aufweisen und somit über eine Verflüssigung des Chlors abgetrennt werden können. Bei der Chlorverflüssigung sind der hohe Energieaufwand für die Abkühlung des Chlors und die damit verbundenen Energiekosten von großem Nachteil.

Chlor wird für die industrielle Anwendung in flüssiger Form gespeichert und zu den jeweiligen Verbrauchsstellen transportiert, wobei der Transport über Rohrleitungen oder auch überirdisch über Straße oder Schiene erfolgt. In der Regel liegt das Chlor hierbei in flüssiger Form bei Raumtemperatur unter erhöhtem Druck von z.B. 7 bar vor. Alternativ hierzu kann Chlor auch bei niedrigen Drücken, dann jedoch bei gleichzeitig sehr niedrigen Temperaturen im Bereich von -35 °C, gespeichert werden. Von Vorteil wäre der Transport von Chlor in flüssiger Form bei deutlich geringeren Drücken, bevorzugt 1000 hPa und milden Temperaturen, bevorzugt 25 °C.

Bei der Produktion von Chlor und auch bei anderen chemischen Produktionen, die Chlor verwenden, fallen verschiedene Prozessgase an, die Restmengen von Chlor enthalten. Technisch wird das restliche Chlor durch chemische Umsetzung, z.B. mit Natronlauge, aus dem Prozessgas entfernt, wobei Natriumhypochlorit anfällt. Ein Teil des Chlors kann durch Zugabe von Salzsäure wieder freigesetzt werden, allerdings wird dabei Salzsäure verbraucht und Natriumchlorid fällt als Nebenprodukt an. Von Vorteil wäre ein Prozess, der sämtliches Chlor mit guter Effizienz aus Prozessgasen abtrennt und es ermöglicht das gespeicherte Chlor vollständig wiederzuverwerten.

Die oben beschriebenen Verfahren zur Reinigung, Speicherung und Transport durch Verflüssigung oder Gaswäsche sind im Stand der Technik und der industriellen Anwendung üblich.

Die zu lösenden Herausforderungen bestehen darin, ein reversibles Speichermedium für Chlor bereitzustellen, welches große Mengen von Chlor unter milden Bedingungen, bevorzugt bei Temperaturen von 25 °C und Umgebungsdruck (typischerweise 1000±100 hPa) aufnehmen, speichern und nach Bedarf wieder freisetzen kann, um die energieintensive Verflüssigung bei tiefen Temperaturen und/oder hohen Drücken zu umgehen. Dieses Speichermedium soll innerhalb des Arbeitsbereiches, also zwischen be- und entladenem Zustand, insbesondere flüssig sein, um das Speichermedium mit Hilfe gängiger Pumpen zu fördern und zu den Verbrauchsstellen zu transportieren.

Eine weitere zu lösende Aufgabe besteht darin, ein Speichermedium mit obigen Eigenschaften bereitzustellen, um Chlor auf einfache Weise aus Gasmischungen zu isolieren und wiederzugewinnen, wobei das Speichermedium nach seiner Entladung wiederverwendet werden kann.

Eine weitere zu lösende Aufgabe besteht darin, ein Speichermedium bereitzustellen, welches Chlor, unter obigen Bedingungen, bindet und somit den Dampfdruck des Chlors deutlich senkt im Vergleich zu ungebundenem Chlor. Ein Vorteil eines solchen Speichermediums ist, dass das gebundene Chlor, im Falle einer Leckage des Speicherbehälters, deutlich langsamer als elementares Chlor in die Umgebung entweicht, was mehr Zeit für die Ergreifung entsprechender Schutz- und Reparaturmaßnahmen bietet.

Speichermedien auf Basis von Chloradsorption an porösen Festkörpern über das Verfahren der Druckwechseladsorption (PSA Pressure Swing Adsorption) sind im Stand der Technik beschrieben. In EP0741108A2 werden als Adsorbentien für Chlor Zeolithe, nicht-zeolithische poröse saure Oxide, Aktivkohle und Molekularsiebkohle vorgeschlagen. US5376164A1 beschreibt als Adsorbentien Molekularsiebe einschließlich zeolithischer Siebe, Aktivkohle, Aktivton, Silikagel, und aktiviertes Aluminiumoxid. Die in US5376164A1 beschriebenen Chloradsorptionsmessungen an verschiedenen Zeolithen und Silikagel zeigen unter den jeweiligen Messbedingungen (Raumtemperatur, maximal 0,87 bar) eine maximale Beladung von < 0,2 g Chlor pro g Speichermaterial, was sehr gering und für eine industrielle Anwendung zu teuer ist. Außerdem handelt es sich bei den Speichermedien um Feststoffe, was insbesondere die Flexibilität bei Abfüllung und Transport des gespeicherten Chlors einschränkt.

Die Erfindung geht aus von der im Stand der Technik beschriebenen Beobachtung, dass bestimmte ionische Verbindungen, bestehend aus organischen Kationen und Chlorid als Anion, eine Affinität zu Chlor und Chlor enthaltenden Gasen besitzen und Chlor unter Bildung von Polychloriden (Clₓ⁻mit x >1) aufnehmen können (F. D. Chattaway, G. Hoyle, J. Chem. Soc., Trans. 1923, 123, 654.; R. Brückner, H. Haller, S. Steinhauer, C. Müller, S. Riedel, Angew. Chem. Int. Ed 2015, 54, 51, 15579-15583).

So beansprucht US7638058 BB ein Verfahren zur Speicherung und Reinigung eines instabilen Fluids mit Hilfe einer ionischen Flüssigkeit innerhalb eines Behälter und die Bereitstellung dieses Behälters an einen Abnehmer. Die Freisetzung des Fluids erfolgt durch Erhöhung der Temperatur, Erniedrigung des Umgebungsdrucks oder durch Spülen mit einem Inertgas. Bei den instabilen Fluiden handelt es sich vorzugsweise um Verbindungen aus der Gruppe Digerman, Boran, Diboran, Disilan, Fluor, halogenierte Kohlenstoff-Wasserstoff-Sauerstoffverbindungen, Selenwasserstoff, Stiban, Stickoxid, organometallische Verbindungen und Mischungen davon. Zur Speicherung wird das Fluid mit einer ionischen Flüssigkeit kontaktiert. Zur Reinigung des Fluids von Wasser, CO₂, O₂, CO, NO, NO₂, N₂O₄, SO₂, SO₃, SO, S₂O₂, SO₄ ist die Zugabe von Metalloxiden, thermisch aktiviertem Aluminium, Kohlenstoffmaterialien oder Molekularsieben teilweise bevorzugt. Neben einer Vielzahl ionischer Flüssigkeiten mit unterschiedlichen Anionen werden als Vertreter ionischer Flüssigkeiten mit Chlorid als Anion substituierte Imidazolium- und Pyridinium-Kationen oder Tributylhexadecylphosphonium als Kation genannt.

WO2007109611A1 beschreibt ein Verfahren zur sicheren Speicherung und dem Transport von Chlor bei Umgebungsdruck. Bevorzugt sind 1-Methyl-3-Ethylimidazoliumchlorid und Pyridin Hydrochlorid. Tetraalkylammonium- und Phosphoniumchloride werden ebenfalls angeführt.

In WO12130803A1 ist ein Verfahren zur Abtrennung von Halogenen aus Stoffgemischen (CO, CO₂, N₂, Methylisocyanat und Methylbromid) beschrieben. Dabei findet die Kontaktierung der ionischen Flüssigkeit mit Chlor oder chlorhaltigem Gas in einer Rektifikationskolonne in einem Temperaturbereich von ≥ 50 °C bis ≤ 200 °C und Drücken von ≥ 0.1 bar bis ≤ 30 bar statt. Die chlorhaltige ionische Flüssigkeit wird anschließend einer Trenneinrichtung zugeführt. Dort wird unter erhöhter Temperatur und/oder Druckerniedrigung das Chlor (teilweise) freigegeben. Folgende Verbindungsklassen werden vorgeschlagen: Imidazolium-, Pyridinium-, Pyrrolidinium-, Guanidinium-, Phosphonium- und Ammoniumchloride. Bevorzugte Verbindungen sind Trihexyltetradecylphosphoniumchlorid, 1-Benzyl-3-methylimidazoliumchlorid und 1-Methyl-3-octylimidazoliumchlorid. Tetrabutylammoniumchlorid wird als Additiv zur Verbesserung der Fließfähigkeit dargelegt.

Es ist grundsätzlich bekannt, dass sich ionische Verbindungen, die als Feststoffe vorliegen, durch Chloreintrag verflüssigen können. Die technische Umsetzung eines reversiblen, flüssigen Speichermediums auf Basis der ionischen Verbindung Trihexyltetradecylphosphoniumtrichlorid, wie in WO12130803A1 vorgeschlagen, erweist sich allerdings als nachteilig, da die genannte Verbindung im beladenen Zustand sehr viskos ist (η> 407 mPa·s bei 25 °C, X. Li, A. Van den Bossche, T. Vander Hoogerstraete, K. Binnemans, Chemical Communications 2018, 54, 5, 475-478). Selbiges gilt für mögliche Speichermedien auf Grundlage von Tetrabutylammoniumchlorid (siehe Beispiel 1) und anderer im Stand der Technik genannten Verbindungen.

Als weitere Herausforderung gilt, dass die Speichermedien sowohl chemisch, als auch strukturell stabil gegenüber korrosivem Chlor sein müssen. Zum einen führt eine Chlorierung des organischen Kations zur Freisetzung von Salzsäure, die auf Grund ihrer Korrosivität einen nachteiligen Einfluss auf Anlagenteile besitzen kann. Zum anderen führt eine Chlorierung des Kations zu einer Erhöhung des Molekulargewichts der ionischen Verbindung, was zu einer Verringerung der relativen Beladungen (g Chlor / g ionische Verbindung) führt und damit die Wirtschaftlichkeit des Speichermediums mindert. So eignen sich Imidazolium basierte Kationen, wie sie in US7638058 B, WO2007109611A1 und WO12130803A1 vorgeschlagen werden, letztlich nicht, da eine Chlorierung des aromatischen Kerns und der Seitenketten mit Kettenlängen von 4 und mehr Kohlenstoffatomen stattfindet (X. Li, A. Van den Bossche, T. Vander Hoogerstraete, K. Binnemans, Chemical Communications 2018, 54, 5, 475-478). Daraus geht hervor, dass andere aromatische ionische Verbindungen, wie etwa Pyridinium basierte ionische Verbindungen, und alkylische Ammonium- bzw. Phosphoniumchloride mit Kettenlängen von 4 und mehr Kohlenstoffatomen, wie Trihexyltetradecylphosphoniumtrichlorid, auf Grund ihrer Tendenz zur Chlorierung nicht bevorzugt sind.

Überraschenderweise wurde gefunden, dass Speichermedien auf Grundlage ionischer Verbindungen der allgemeinen Formel N-R1ₘR2ₙR3ₒ⁺ Clᵣ⁻ und P-R4ₚR5_{q}⁺ Clₛ⁻ oben genannte technische Herausforderungen lösen und als reversibler Chlorspeicher eingesetzt werden können und um Chlor aus Chlor enthaltenden Prozessgasen abzutrennen. Dabei können Sie einzeln oder in bestimmten Mischungsverhältnissen eingesetzt werden. Die Reste R1, R2, R3, R4 und R5 sind dabei unabhängig voneinander gleich oder verschieden und bedeuten einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl oder n-Propyl, wobei die Reste R1, R2 und R3 bzw. die Reste R4 und R5 jeweils voneinander verschieden sind, und die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss.

Dementsprechend verfügen die Verbindungen über kurze Alkylketten und sind nicht aromatisch, um eine Chlorierung der ionischen Verbindung vorzubeugen. Die Erfindung geht aus von ionischen Verbindungen der Formel N-R1ₘR2ₙR3ₒ⁺Clᵣ⁻ und P-R4ₚR5_{q}⁺ Clₛ⁻ mit r, s = 1. Bei 25 °C und 1000 hPa liegen die entsprechenden ionischen Verbindungen als Feststoffe vor und bilden die Grundlage des neuen Chlorspeichers.

Um zu reversiblen Chlorspeichern, die sowohl im mit Chlor be- als auch entladenen Zustand flüssig sind, zu gelangen, werden obige Feststoffe in einer Erstbeladung mit Chlor kontaktiert und für die Nutzung konditioniert. Auf diese Weise entstehen beispielsweise zunächst Chlorspeicherverbindungen der Formel N-R1ₘR2ₙR3ₒ⁺ Clᵣ⁻ und P-R4ₚR5_{q}⁺ Cls⁻ mit r, s > 1 und es kommt zu einer Verflüssigung der ursprünglich festen ionischen Verbindung unter Einlagerung von Chlor als Polychloride. Bei weiterer Chlorzugabe gelangt man zu beladenen Chlorspeicherverbindungen der Formel N-R1ₘR2ₙR3ₒ⁺ Cl₍ᵣ₊₂₎⁻ und P-R4ₚR5_{q}⁺ Cl₍ₛ₊₂₎⁻ wobei die Zeichen r und s unabhängig voneinander für eine Zahl ≥ 1 bis ≤ 7, bevorzugt r, s ≥ 1 bis ≤ 3 stehen.

Als beladen gilt das Speichermedium, wenn unter den anliegenden Aufnahmebedingungen (gewählte Temperatur und gewählter Druck) kein weiteres Chlor mehr durch das Speichermedium aufgenommen wird. Entladen wird das Speichermedium durch Änderung der Umgebungsbedingungen (Erhöhung der Temperatur, Minderung des Partialdrucks) oder durch Durchleiten eines Fremdgases. Das Speichermedium gilt als entladen, wenn unter den gewählten Umgebungsbedingungen (gewählte Temperatur und gewählter Druck) kein weiteres Chlor aus dem Speichermedium mehr freigegeben wird. Die Differenz zwischen dem be- und entladenen Zustand des Speichermediums entspricht der freigesetzten und damit nutzbaren Menge Chlor. Für eine technische Umsetzung ist eine hohe Chlorfreisetzung wichtig und das der Speicher unter den gewählten Bedingungen (Temperatur und Druck) ausreichend flüssig ist, um mittels Pumpen und anderer Förderanlagen prozessiert zu werden. Diese Anforderungen zu vereinen stellt eine große Herausforderung dar, die im Stand der Technik nicht hinreichend gelöst ist.

Gegenstand der Erfindung ist folglich ein Speichermedium zur reversiblen Aufnahme von Chlor aus Chlor enthaltendem Gas - vorstehend und nachstehend auch abgekürzt Chlorspeicher genannt - mindestens enthaltend wenigstens eine ionische Verbindung der allgemeinen Formel (I) und/oder (II),

(I) N-R1ₘR2ₙR3ₒ⁺ Clᵣ⁻

(II) P-R4ₚR5_{q}⁺ Clₛ⁻

bevorzugt ionischen Verbindungen der allgemeinen Formel (I),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl oder n-Propyl bedeuten, und wobei die Reste R1, R2 und R3 bzw. die Reste R4 und R5 jeweils voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
die Zeichen r und s unabhängig voneinander für eine Zahl ≥ 1 bis ≤ 7, bevorzugt r, s ≥ 1 bis ≤ 3 stehen,
und wobei das Speichermedium im Arbeitsbereich der Beladung mit Chlor und Entladung von Chlor, insbesondere bei einer Temperatur von 25 °C und einem Druck von 1000±100 hPa, flüssig ist.

Besonders bevorzugt ist ein Speichermedium, bei dem die ionische Verbindung (I) oder (II) ausgewählt ist aus wenigstens einer Verbindung der Reihe: NEtMe₃Clᵣ, NEt₂Me₂Clᵣ, NEt₃MeClᵣ, NMePr₃Clᵣ, PEt₃MeClₛ, wobei r und s unabhängig voneinander für eine Zahl ≥ 1 bis ≤ 7, bevorzugt r, s unabhängig voneinander für eine Zahl ≥ 1 bis ≤ 3 stehen.

In einer bevorzugten Variante der Erfindung ist die ionische Verbindung (I) oder (II) im Speichermedium ausgewählt aus wenigstens einer Verbindung der Reihe: NEtMe₃Clᵣ, NEt₂Me₂Clᵣ, NEt₃MeClᵣ, NMePr₃Clᵣ, PEt₃MeClₛ, wobei r und s unabhängig voneinander für eine Zahl ≥ 1 bis ≤ 7, bevorzugt r, s unabhängig voneinander für eine Zahl ≥ 1 bis ≤ 3 stehen.

Ganz besonders bevorzugt ist die Verbindung (I) ausgewählt aus wenigstens einer Verbindung der Reihe: NEtMe₃Clᵣ, NEt₂Me₂Clᵣ, NEt₃MeClᵣ, wobei r für eine Zahl ≥ 1 bis ≤ 7, bevorzugt für eine Zahl ≥ 1 bis ≤ 3 steht.

Bevorzugt ist folglich ein neues Speichermedium, bei dem die enthaltenden ionischen Verbindungen der Formel (I) und/oder der Formel (II) mit Chlor in Kontakt gebracht sind. Dabei wird Chlor bei milden Bedingungen aufgenommen, bevorzugt bei Temperaturen im Bereich von ≥ 0 °C bis ≤ 40 °C, besonders bevorzugt bei einer Temperatur ≥ 15 °C bis ≤ 30 °C, und einem Druck im Bereich von ≥ 900 hPa bis ≤ 7000 hPa, bevorzugt ≥ 900 hPa bis ≤ 1100 hPa.

Insbesondere erfolgt die Chloraufnahme durch das Speichermedium unter Umgebungsdruck (umgebender atmosphärischer Luftdruck, z.B. von 1 bar (1000 hPa) auf NN) und 20-25 °C, wobei die ionische Verbindung zu einem Polychlorid der Formel (III) und/oder der Formel (IV) reagiert,

(III) N-R1ₘR2ₙR3ₒ⁺ Cl₍ᵣ₊₂₎⁻

(IV) P-R4ₚR5_{q}⁺ Cl₍ₛ₊₂₎⁻

bevorzugt ionische Verbindungen der allgemeinen Formel (III),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl oder n-Propyl bedeuten, und wobei die Reste R1, R2 und R3 bzw. die Reste R4 und R5 jeweils voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
die Zeichen r und s unabhängig voneinander für eine Zahl ≥ 1 bis ≤ 7, bevorzugt r, s unabhängig voneinander für eine Zahl ≥ 1 bis ≤ 3 stehen.

Die erfindungsgemäßen Chlorspeicher können große Mengen Chlor aufnehmen und enthalten im beladenen Zustand (insbesondere gemessen bei 25 °C und 1000 hPa) insbesondere mindestens 0,65 g Cl₂ / g ionische Verbindung, bevorzugt mindestens 0,7 g Cl₂ / g ionische Verbindung, besonders bevorzugt 0,75 g Cl₂ / g ionische Verbindung. Bei diesen Beladungen können unterschiedliche Anteile an verschiedenen Polychloridanionen nebeneinander vorliegen, wie etwa Cl₃⁻, Cl₅⁻, Cl₇⁻ und höher.

Gegenstand der Erfindung ist auch ein Verfahren zur reversiblen Speicherung von Chlor und Chlor aus Chlor enthaltendem Gas in einem Speichermedium, dadurch gekennzeichnet, dass in einem ersten Schritt ein oben beschriebenes neues Verfahren zur Abtrennung und Speicherung von Chlor aus Chlor enthaltendem Gas durchgeführt wird und in einem weiteren Verfahrensschritt gespeichertes Chlor aus dem beladenen Speichermedium durch Temperaturerhöhung des Speichermediums und/oder Erniedrigung des Partialdrucks über dem Speichermedium entnommen und das erhaltene Chlor abgeführt wird.

Entsprechend obiger Ausführungen wird die Erstbeladung und damit die Konditionierung des Speichermediums insbesondere einmalig in einem ersten Schritt durchgeführt, welcher von der Aufgabe der reversiblen Chlorspeicherung räumlich und auch zeitlich getrennt beziehungsweise vorgelagert sein kann, um einen flüssigen Chlorspeicher der Formel N-R1ₘR2ₙR3ₒ⁺ Clᵣ⁻ und/oder P-R4ₚR5_{q}⁺ Clₛ⁻ mit r, s ≥ 1 zu erhalten. Der konditionierte Chlorspeicher wird einer Einrichtung für die reversible Chlorspeicherung zugeführt, in dem die Kontaktierung mit dem zu bindenden Chlor erfolgt und ein beladener Chlorspeicher der Formel N-R1ₘR2ₙR3ₒ⁺ Cl₍ᵣ₊₂₎⁻ und/oder P-R4ₚR5_{q}⁺ Cl₍ₛ₊₂₎⁻ mit r, s ≥ 1 erhalten wird. Ohne auf eine bestimmte Auslegung der Anlage festgelegt zu sein, kann es sich dabei um einen Sicherheits- oder Druckbehälter oder ähnliches handeln.

Anschließend kann der beladene Chlorspeicher mittels Pumpen gefördert, transportiert und gelagert werden. Bei Bedarf kann das gebundene Chlor aus dem Chlorspeicher wieder freigesetzt werden, indem man den beladenen Chlorspeicher einer Trenneinrichtung zuführt. Bei der Entladung wird der beladene Chlorspeicher der Formel N-R1ₘR2ₙR3ₒ⁺ Cl₍ᵣ₊₂₎⁻ und P-R4ₚR5_{q}⁺ Cl₍ₛ₊₂₎⁻ mit r, s ≥ 1 insbesondere wieder in einen entladenen Chlorspeicher der Formel N-R1ₘR2ₙR3ₒ⁺ Cl₍ᵣ₎⁻ und P-R4ₚR5_{q}⁺ Cl₍ₛ₎⁻ mit r, s ≥ 1 überführt, wobei der entladene Chlorspeicher wiederverwendet werden kann.

Die Entladung des Chlorspeichers erfolgt durch die gezielte Veränderung der Umgebungsbedingungen (Erhöhung der Temperatur und/oder Minderung des Partialdrucks). Dabei wird der Chlorspeicher typischerweise soweit entladen, dass der entladene Chlorspeicher noch flüssig ist und der Formel N-R1ₘR2ₙR3ₒ⁺ Cl₍ᵣ₎⁻ und P-R4ₚR5_{q}⁺ Cl₍ₛ₎⁻ mit r, s ≥ 1 entspricht.

Die Entladung des reversiblen Speichermediums erfolgte bei einer Temperatur im Bereich von ≥ 40 °C bis ≤ 200 °C, bevorzugt ≥ 50 °C bis ≤ 150 °C, besonders bevorzugt ≥ 60 °C bis ≤ 100 °C bei 1000±100 hPa. Die Freisetzung kann optional durch Minderung des Partialdrucks initiiert werden, bevorzugt ist der Partialdruck um mindestens 100 hPa gegenüber dem ersten Schritt vermindert.

In einer besonders bevorzugten Ausführung wird der Chlorspeicher bei 1000 hPa und einer Temperatur von 60 °C entladen. Dabei werden insbesondere mindestens 0,10 g Chlor / g ionische Verbindung, bevorzugt mindestens 0,20 g Chlor / g ionische Verbindung, besonders bevorzugt mindestens 0,30 g Chlor / g ionische Verbindung aus dem Chlorspeicher freigesetzt.

Bevorzugt sind Chlorspeicher, die im entladenen Zustand flüssig sind und dynamische Viskositäten η_{entladen} von ≤ 400 mPa·s, besonders bevorzugt ≤ 200 mPa·s aufweisen (gemessen bei 1000 hPa und 25 °C), damit die entladenen Chlorspeicher mittels üblicher Pumpen prozessiert werden können.

Weiterer Gegenstand der Erfindung ist ein Verfahren zur Abtrennung von Chlor aus Chlor enthaltendem Gas, dadurch gekennzeichnet, dass das Gas mit einem flüssigen Speichermedium enthaltend ionische Verbindungen der Formel (I) und/oder der Formel (II), kontaktiert wird, wobei das im Gas enthaltene Chlor als ionische Verbindungen der Formel (III) und/oder der Formel (IV) gebunden wird.

(III) N-R1ₘR2ₙR3ₒ⁺ Cl₍ᵣ₊₂₎⁻

(IV) P-R4ₚR5_{q}⁺ Cl₍ₛ₊₂₎⁻

bevorzugt ionischen Verbindungen der allgemeinen Formel (III),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl oder n-Propyl bedeuten, und wobei die Reste R1, R2 und R3 bzw. die Reste R4 und R5 jeweils voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
die Zeichen r und s unabhängig voneinander für eine Zahl ≥ 1 bis ≤ 7, bevorzugt r, s unabhängig voneinander für eine Zahl ≥ 1 bis ≤ 3 stehen.

In einer bevorzugten Variante des neuen Verfahrens erfolgt die Erstbeladung und damit Konditionierung mit Chlor soweit, dass ein Speichermedium der Formel (I) und/oder der Formel (II) erhalten wird wobei r und s unabhängig voneinander für eine Zahl ≥ 1 bis ≤ 7, bevorzugt r, s ≥ 1 bis ≤ 3 steht und wobei das Speichermedium nicht vollständig mit Chlor beladen ist.

In einer besonders bevorzugten Ausführung des neuen Verfahrens wird Chlor aus Chlor enthaltendem Gas durch Kontaktierung mit obigem nicht vollständig beladenem Speichermedium abgetrennt, wodurch das Speichermedium beladen wird und das Speichermedium entsprechend der Formel (I) und/oder der Formel (II) zu ionischen Verbindungen der Formel (III) bzw. (IV) umgesetzt werden.

Bevorzugt erfolgt die Abtrennung von Chlor aus Chlor enthaltendem Gas bei milden Temperaturen, bevorzugt bei einer Temperatur im Bereich von ≥ 0 °C bis ≤ 40 °C, besonders bevorzugt bei einer Temperatur ≥ 15 °C bis ≤ 30 °C, und einem Druck im Bereich von ≥ 900 hPa bis ≤ 7000 hPa, bevorzugt ≥ 900 hPa bis ≤ 1100 hPa.

Insbesondere können obige flüssige, reversible Chlorspeicher verwendet werden, um Chlor aus Chlor enthaltenden Prozessgasen abzutrennen, um das Prozessgas von Chlor zu reinigen und um das Chlor anschließend für andere Anwendungen wieder zur Verfügung zu stellen. Die Trennaufgabe beinhaltet Chlor aus Prozessgasen abzutrennen, insbesondere solchen die H₂, CO₂, O₂, CO, NO, NO₂, N₂O₄, SO₂, SO₃, SO, S₂O₂, SO₄ und Mischungen davon enthalten. Die Abtrennung des Chlors aus dem Gasgemisch erfolgt durch Kontaktierung des chlorhaltigen Prozessgases mit einem flüssigen, entladenen Chlorspeicher der Formel (I) und/oder der Formel (II) entsprechend obiger Ausführungen.

Die Kontaktierung des Speichermediums mit Chlor enthaltendem Gas kann grundsätzlich in bekannten Gas-Flüssigkeits-Absorptionsapparaten, z.B. einer Füllkörperkolonne, Bodenkolonne etc. vorgenommen werden.

Durch die Kontaktierung wird ein beladener Chlorspeicher der Formel N-R1ₘR2ₙR3ₒ⁺ Cl₍ᵣ₊₂₎⁻ und P-R4ₚR5_{q}⁺ Cl₍ₛ₊₂₎⁻ mit r, s ≥ 1 erhalten, der am Boden der Kolonne als Flüssigkeit entnommen wird.

Die abzutrennenden Prozessgase, die nicht Chlor enthalten, verbleiben in der Gasphase über dem flüssigen Chlorspeicher und können abgetrennt werden.

Ohne auf eine bestimmte Auslegung der Anlage festgelegt zu sein, kann der flüssige, beladene Chlorspeicher entweder in derselben Anlage durch eine Temperaturerhöhung und/oder Druckminderung wieder entladen werden oder aber mittels Pumpen in eine separate Anlage für die Entladung überführt werden. Grundsätzlich kann die Entladung des beladenen Chlorspeichers analog zu obigen Ausführungen durchgeführt werden.

Weiterer Gegenstand der Erfindung ist die Verwendung des neuen Speichermediums zur Speicherung von Chlor und zur Abtrennung von Chlor aus Chlor enthaltenden Gasen, insbesondere zur Befüllung von Vorratsbehältern für Chlor. Als Vorratsbehälter kommen insbesondere Drucktanks, Gasflaschen aber auch Sicherheitsbehälter für korrosive Flüssigkeiten in Frage.

Bevorzugt bindet das neue Speichermedium Chlor, sodass der Dampfdruck des Chlorspeichers geringer ist, als der Dampfdruck elementaren Chlors unter selbigen Bedingungen. Dies führt zu einer erhöhten Sicherheit bei der Handhabung von Chlor, insbesondere beim Transport und der Lagerung. Im Falle einer Freisetzung eines solchen Chlorspeichers durch eine Leckage wird Chlor langsamer an die Umgebung abgegeben. Dadurch steht mehr Zeit für die Ergreifung geeigneter Schutz- und Rettungsmaßnahmen zur Verfügung als bei einem Austritt elementaren Chlors.

### Beispiel 1 (Stand der Technik)

Tetrabutylammoniumchlorid [NBu₄]Cl wurde in einem Reaktor vorgelegt und bei 20 °C temperiert. Die Erstbeladung der ionischen Verbindung erfolgte durch Einleiten von Chlor bei ca. 1000 hPa, wobei sich [NBu₄]Cl verflüssigte. Auf diese Weise nahm [NBu₄]Cl 0,61 g Chlor / g ionische Verbindung auf. Der beladene Chlorspeicher wurde bei 60 °C entladen, wobei 0,23 g Chlor / g ionische Verbindung wieder freigesetzt wurde. Die dynamische Viskosität des bei 60 °C entladenen Chlorspeichers betrug 430 mPa·s. Die Chlorbeladungen der be- und entladenen Zustände wurden bei 20 °C und 1000 hPa ermittelt. Die dynamische Viskosität der mit Chlor be- und entladenen Speicher wurden bei 25 °C und 1000 hPa mittels eines Mikro-Ubbelohde-Viskosimeter (0,53 mm Innendurchmesser, SI-Analytics GmbH, Mainz) gemessen.

Die Kombination aus hoher Viskosität und niedriger Chlorfreisetzung erwiesen sich als nachteilig für eine technische Umsetzung des Prozesses.

### Beispiel 2 (erfindungsgemäß)

Triethylmethylammoniumchlorid [NEt₃Me]Cl wurde in einem Reaktor vorgelegt und bei 20° C temperiert. Die Erstbeladung der ionischen Verbindung erfolgte durch Einleiten von Chlor bei ca. 1000 hPa, wobei sich [NEt₃Me]Cl verflüssigte. Auf diese Weise nahm [NEt₃Me]Cl 0,87 g Chlor / g ionische Verbindung auf und die dynamische Viskosität des flüssigen, beladenen Chlorspeichers betrug 19 mPa·s. Über Ramanspektroskopie konnte gezeigt werden, dass der beladene Chlorspeicher aus einer Mischung unterschiedlicher tri- bis nonachloride besteht und formal [NEt₃Me]Cl_{4,7} entspricht. Der beladene Speicher wurde bei 60 °C entladen, wobei 0,30 g Chlor / g ionische Verbindung freigesetzt wurde. Die dynamische Viskosität des entladenen Chlorspeichers betrug 44 mPa·s.

Im Vergleich zu Chlorspeichern auf Basis von [NBu₄]Cl ist die Viskosität des be- und entladenen Zustandes deutlich niedriger bei gleichzeitig höherer Chlorfreisetzung.

Der entladene Chlorspeicher konnte mit neuem Chlor beladen werden, wobei die Aufnahme unter den oben genannten Bedingungen erfolgte (Einleiten von Chlor bei ca. 1000 hPa und einer Temperierung des Reaktors auf 20 °C). Bei der neuerlichen Beladung wurde wieder 0,87 g Chlor / g ionische Verbindung aufgenommen und bei einer anschließenden Entladung unter obigen Bedingungen wieder 0,30 g Chlor / g ionische Verbindung freigesetzt. Der Speicher konnte mehr als 4 mal be- und entladen werden, ohne dass eine Abnahme der Chlor Speicher- und Freisetzungsmenge festgestellt wurde.

### Beispiel 3 (erfindungsgemäß)

Diethyldimethylammoniumchlorid [NEt₂Me₂]Cl wurde in einem Reaktor vorgelegt und bei 20 °C temperiert. Die Erstbeladung der ionischen Verbindung erfolgte durch Einleiten von Chlor bei ca. 1000 hPa, wobei sich [NEt₂Me₂]Cl verflüssigte. Auf diese Weise nahm [NEt₂Me₂]Cl 0,82 g Chlor / g ionische Verbindung auf und die dynamische Viskosität des flüssigen, beladenen Chlorspeichers betrug 16 mPa·s. Formal entspricht der beladene Speicher der Zusammensetzung [NEt₂Me₂]Cl_{4,2}. Der beladene Speicher wurde bei 60 °C entladen, wobei 0,29 g Chlor / g ionische Verbindung wieder freigesetzt wurde. Die dynamische Viskosität des entladenen Chlorspeichers betrug 37 mPa·s. Im Vergleich zu Chlorspeichern auf Basis von [NBu₄]Cl ist die dynamische Viskosität des be- und entladenen Zustandes deutlich niedriger bei gleichzeitig höherer Chlorfreisetzung.

In Analogie zu Beispiel 2 konnte der entladene Chlorspeicher mit neuem Chlor beladen werden, wobei die Aufnahme unter den oben genannten Bedingungen erfolgte (Einleiten von Chlor bei ca. 1000 hPa und einer Temperierung des Reaktors auf 20 °C). Bei der neuerlichen Beladung wurde 0,82 g Chlor / g ionische Verbindung aufgenommen und bei einer anschließenden Entladung unter obigen Bedingungen wieder 0,29 g Chlor / g ionische Verbindung freigesetzt. Der Speicher konnte mehr als 4 mal be- und entladen werden, ohne dass eine Abnahme der Chlor Speicher- und Freisetzungsmenge festgestellt wurde.

## Patentansprüche

1. Speichermedium zum Zwecke eines Chlorspeichers zur reversiblen Aufnahme von Chlor aus Chlor enthaltendem Gas mindestens enthaltend wenigstens eine ionische Verbindung der allgemeinen Formel (I) und/oder (II),
(I) N-R1ₘR2ₙR3ₒ⁺ Clᵣ⁻
(II) P-R4ₚR5_{q}⁺ Clₛ⁻
bevorzugt ionischen Verbindungen der allgemeinen Formel (I),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl bedeuten, und wobei die Reste R1, R2 und R3 bzw. die Reste R4 und R5 jeweils voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
die Zeichen r und s unabhängig voneinander für eine Zahl ≥ 1 bis ≤ 7, bevorzugt r, s ≥ 1 bis ≤ 3 stehen,
und wobei das Speichermedium im Arbeitsbereich der Beladung mit Chlor und Entladung von Chlor, insbesondere bei einer Temperatur von 25 °C und einem Druck von 1000 ± 100 hPa, flüssig ist.

2. Speichermedium gemäß Anspruch 1, **dadurch gekennzeichnet, dass** in der Verbindung der allgemeinen Formel (I) die Zeichen m und n für die 1, 2, 3 und o für die 0 stehen.

3. Speichermedium gemäß einem der Ansprüche 1 oder 2, **dadurch gekennzeichnet, dass** die ionische Verbindung (I) oder (II) ausgewählt ist aus wenigstens einer Verbindung der Reihe: NEtMe₃Clᵣ, NEt₂Me₂Clᵣ, NEt₃MeClᵣ, NBuEt₂MeClᵣ, NMePr₃Clᵣ, NBu₂Me₂Clᵣ, PEt₃MeClₛ, wobei r und s unabhängig voneinander für eine Zahl ≥ 1 bis ≤ 7, bevorzugt r, s ≥ 1 bis ≤ 3 steht.

4. Speichermedium gemäß einem der Ansprüche 1 oder 2, **dadurch gekennzeichnet, dass** die Verbindung (I) insbesondere ausgewählt ist aus wenigstens einer Verbindung der Reihe: NEtMe₃Clᵣ, NEt₂Me₂Clᵣ, NEt₃MeClᵣ, wobei r für eine Zahl ≥1 bis ≤7, bevorzugt r, s ≥ 1 bis ≤ 3 steht.

5. Speichermedium gemäß einem der Ansprüche 1 bis 4, **dadurch gekennzeichnet, dass** die enthaltenden ionische Verbindungen der Formel (I) und/oder der Formel (II), insbesondere unter Umgebungsdruck (atmosphärischer Luftdruck z.B. von 1 bar (1000 hPa) auf NN) mit Chlor in Kontakt gebracht sind und die ionische Verbindung zu einem Polychlorid der Formel (III) und/oder der Formel (IV) reagiert ist,
(III) N-R1ₘR2ₙR3ₒ⁺ Cl₍ᵣ₊₂₎⁻
(IV) P-R4ₚR5_{q}⁺ Cl₍ₛ₊₂₎⁻
wobei r und s unabhängig voneinander für eine Zahl ≥ 1 bis ≤ 7, bevorzugt r, s ≥ 1 bis ≤ 3 steht.

6. Speichermedium gemäß einem der Ansprüche 1 bis 5, **dadurch gekennzeichnet, dass** das Speichermedium im beladenen Zustand mindestens 0,65 g Cl₂/g ionische Verbindung, bevorzugt mindestens 0,7 g Cl₂/g ionische Verbindung, besonders bevorzugt mindestens 0,75 g Cl₂/g ionische Verbindung enthält.

7. Speichermedium gemäß einem der Ansprüche 1 bis 6, **dadurch gekennzeichnet, dass** das Speichermedium im beladenen Zustand bei einer Temperatur von 25 °C und einem Druck von 1000±100 hPa flüssig ist.

8. Speichermedium gemäß einem der Ansprüche 1 bis 7, **dadurch gekennzeichnet, dass** das Speichermedium im mit Chlor vollständig beladenen Zustand bei einer Temperatur von 25 °C und einem Druck von 1000 hPa eine dynamische Viskosität von höchstens 250 mPa·s, bevorzugt höchstens 150 mPa·s, besonders bevorzugt höchstens 70 mPa·s aufweist und unabhängig davon im entladenen Zustand die dynamische Viskosität des Speichermediums höchstens 400 mPa·s, bevorzugt höchstens 200 mPa·s, besonders bevorzugt höchstens 100 mPa·s beträgt.

9. Verfahren zur Abtrennung von Chlor aus Chlor enthaltendem Gas, **dadurch gekennzeichnet, dass** das Gas mit einem flüssigen Speichermedium enthaltend ionische Verbindungen der Formel (I) und/oder der Formel (II), kontaktiert wird, wobei das im Gas enthaltene Chlor als ionische Verbindungen der Formel (III) und/oder der Formel (IV) gebunden wird,
(III) N-R1ₘR2ₙR3ₒ⁺ Cl₍ᵣ₊₂₎⁻
(IV) P-R4ₚR5_{q}⁺ Cl₍ₛ₊₂₎⁻
bevorzugt als ionischen Verbindungen der allgemeinen Formel (III),
in denen die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl , bevorzugt Methyl, Ethyl oder n-Propyl bedeuten, und wobei die Reste R1, R2 und R3 bzw. die Reste R4 und R5 jeweils voneinander verschieden sind,
wobei die Zeichen m, n, o, p und q unabhängig voneinander für eine ganze Zahl aus der Reihe von 0 bis 3 stehen, wobei die Summe von m+n+o und die Summe von p+q die Zahl 4 ergeben muss,
die Zeichen r und s unabhängig voneinander für eine Zahl ≥ 1 bis ≤ 7, bevorzugt r, s ≥ 1 bis ≤ 3 stehen,

10. Verfahren nach Anspruch 9, **dadurch gekennzeichnet, dass** in einem ersten Schritt als Konditionierung das Speichermedium mit Verbindungen der Formel (I) und/oder der Formel (II), insbesondere mit r, s=1, nur soweit mit Chlorgas beladen wird, bis eine Verflüssigung des Speichermediums erfolgt ist.

11. Verfahren nach Anspruch 10, **dadurch gekennzeichnet, dass** die Konditionierung mit Chlor soweit erfolgt, dass ein Speichermedium der Formel (I) und/oder der Formel (II) erhalten wird, wobei r und s unabhängig voneinander für eine Zahl ≥ 1 bis ≤ 7, bevorzugt r, s ≥ 1 bis ≤ 3 steht und wobei das Speichermedium nicht vollständig mit Chlor beladen ist.

12. Verfahren nach einem der Ansprüche 10 bis 11, **dadurch gekennzeichnet, dass** in einem zweiten Schritt nach der Konditionierung Chlor aus Chlor enthaltendem Gas durch Kontaktierung mit dem flüssigen Speichermedium aus dem ersten Schritt abgetrennt wird, wodurch das Speichermedium beladen wird und die Verbindungen der Formel (I) und/oder der Formel (II) zu ionischen Verbindungen der Formel (III) bzw. (IV) umgesetzt werden.

13. Verfahren nach einem der Ansprüche 9 bis 12, **dadurch gekennzeichnet, dass** der zweite Schritt, die Beladung des Speichermediums, bei einer Temperatur im Bereich von ≥ 0 °C bis ≤ 40 °C, besonders bevorzugt ≥ 15 °C bis ≤ 30 °C, und einem Druck im Bereich von ≥ 900 hPa bis ≤ 7000 hPa, bevorzugt ≥ 900 hPa bis ≤ 1100 hPa erfolgt.

14. Verfahren zur reversiblen Speicherung von Chlor aus Chlor enthaltendem Gas in einem Speichermedium, **dadurch gekennzeichnet, dass** in einem ersten Schritt eine Abtrennung nach einem der Ansprüche 9 bis 13 durchgeführt wird und in einem weiteren Verfahrensschritt gespeichertes Chlor aus dem beladenen Speichermedium durch Temperaturerhöhung des Speichermediums und/oder Erniedrigung des Partialdrucks über dem Speichermedium entnommen und das erhaltene Chlor abgeführt wird.

15. Verfahren nach Anspruch 14, **dadurch gekennzeichnet, dass** die Entnahme des Chlors durch die Entladung des reversiblen Speichermediums bei einer Temperatur im Bereich von ≥ 40 °C bis ≤ 200 °C, bevorzugt ≥ 50 °C bis ≤ 150 °C, besonders bevorzugt ≥ 60 °C bis ≤ 100 °C und bei einem Druck im Bereich von 1000±100 hPa erfolgt.

16. Verfahren nach Anspruch 14 oder 15, **dadurch gekennzeichnet, dass** die Entnahme des Chlors durch eine Minderung des Partialdrucks um mindestens 100 hPa gegenüber dem ersten Schritt initiiert wird.

17. Verfahren gemäß einem der Ansprüche 14 bis 16, **dadurch gekennzeichnet, dass** mindestens 0,10 g Chlor / g ionische Verbindung, bevorzugt mindestens 0,20 g Chlor / g ionische Verbindung, besonders bevorzugt mindestens 0,30 g Chlor / g ionische Verbindung aus dem Speichermedium entnommen werden.

18. Verwendung des Speichermediums nach einem der Ansprüche 1 bis 8 zur Abtrennung von Chlor aus Chlor enthaltenden Gasen oder als reversibles Chlorspeichermaterial, insbesondere zur Befüllung von Vorratsbehältern für Chlor.
